# EUROPEAN PATENT SPECIFICATION

(11) **EP 0 376 616 B1**
(45) Date of publication and mention of the grant of the patent: **15.11.1995**
(21) Application number: 89313397.5
(22) Date of filing: 20.12.1989
(51) Int. Cl.: C08K 7/02

(54) **Fiber-reinforced thermoplastic resin composition**
Faserverstärkte thermoplastische Harzzusammensetzung
Composition de résine thermoplastique renforcée de fibres

(30) Priority: 26.12.1988 JP 328597/88
(43) Date of publication of application: 04.07.1990
(73) Proprietor: POLYPLASTICS CO. LTD., Chuo-Ku Osaka-shi Osaka 541 (JP)
(72) Inventor: Katoh, Atsushi, Fuji-shi Shizuoka (JP)
(74) Representative: Jackson, Peter

(56) References cited:
- EP-A- 0 174 826
- EP-A- 0 246 620
- K. Stoeckhert (ed.), Kunststoff-Lexikon, 7th edition, 1981, Carl Hanser Verlag, München, Wien, p. 465

## Description

The present invention relates to a thermoplastic resin composition which can provide a molded article less susceptible to deformation and having excellent dimensional accuracy and mechanical properties.

Although thermoplastic resins have been used as such for various molded articles, various reinforcements and additives have been incorporated therein depending upon the fields of application for their purpose of improving their properties, particularly mechanical properties. In the field of applications wherein high mechanical strength and rigidity are required, it is known to provide these properties by the use of fibrous reinforcements including glass fibers and carbon fibers. Conventional compositions containing fibrous reinforcement have high mechanical strength and rigidity, but if the fibrous reinforcement is incorporated during molding or annealing the composition also has increased anisotropy, which brings about undesired deformation, i.e., "warp", of an article molded therefore.

The above-described deformation is particularly marked in resins having high crystallinity, such as polyacetal and polybutylene terephthalate, and in resins exhibiting an increase in crystallinity during annealing, such as polyethylene terephthalate, due to the occurrence of shrinkage accompanying crystallization during or after the molding. For this reason, suitability of these resins as a molding material should be determined with particular attention paid to the balance between mechanical properties, such as bending strength and rigidity, and deformation as well as the chemical and thermal properties depending upon the applications. However, in general, the higher the bending strength or rigidity, the larger the deformation.

The balance between the mechanical properties and the deformation is particularly important to precision molded articles wherein dimensional accuracy is required. However, it is very difficult to obtain a combination of a reduction in the degree of deformation of the molded article with an improvement in the mechanical properties such as bending strength and rigidity. In particular, in the case of a crystalline thermoplastic resin, it is very difficult to prepare a molded article with high dimensional accuracy.

In this respect, the present inventors previously proposed a composition comprising a combination of a fibrous reinforcement with flaky filler (see Japanese Patent Application No. 37042/1977 and Japanese Patent Laid-Open No. 121843/1978) and attained a considerable effect. However, use of a flaky filler generally brings about a lowering in the tensile strength such that the composition may be unsuitable for use in some applications of the molded article.

When the matrix resin is a crystalline thermoplastic resin, it is often used in combination with a noncrystalline thermoplastic resin for the purpose of further reducing the deformation. However, combined use of a large amount of a noncrystalline thermoplastic resin spoils advantages inherent in the crystalline thermoplastic resin, e.g., chemical resistance and the thermal deformation temperature, which frequently renders the combined use unfavorable.

As described above, it is difficult to prepare a resin composition meeting the requirements of the balance between the deformation and the strength and other characteristics by the conventional method, particularly in the case of a crystalline thermoplastic resin. This poses an obstacle to development of extensive applications of the thermoplastic resin, so that a further improvement has been eagerly desired.

European Patent Specification No. EP-A-0246620 describes and claims a glass-fiber reinforced thermoplastic resin molded article which comprises a thermoplastic resin reinforced with glass fibers having elongated non-circular cross-section. It states that the said articles are improved in various mechanical strengths as compared with those produced using glass fibers of circular cross-section.

The present inventors have made extensive and intensive studies with a view to developing a fiber-reinforced thermoplastic resin of improved resistance to deformation without bringing about a lowering in mechanical properties such as bending strength and rigidity. They have found, as a result, that deformation, i.e., warp or torsion, of a molded article can be reduced without causing any lowering in the characteristics inherent in the thermoplastic resin per se, for example, mechanical properties such as bending strength and rigidity, thermal resistance, and chemical resistance, by mixing the thermoplastic resin with a fibrous reinforcement having an arcuate or semi-circular cross section, which has led to the completion of the present invention.

Accordingly, the present invention relates to a fiber-reinforced thermoplastic resin composition comprising: (A) a thermoplastic resin, and (B) 1 to 65% by weight, based on the total amount of the composition, of a fibrous reinforcement having a non-circular cross section wherein the cross-sectional area of said reinforcement is 2 x 10⁻⁵ to 8 x 10⁻³mm² and the ratio of the major axis of the cross section perpendicular to a longitudinal direction of said reinforcement (the longest linear distance in the cross section) to the minor axis (the longest linear distance in the cross section in a direction perpendicular to the major axis) is 1.3 to 10, characterised in that the cross section of the fibrous reinforcement has an arcuate or semi-circular contour.

Further, according to the present invention, 5 to 50% by weight of a particulate and/or flaky inorganic filler may be incorporated as component (C) in the above-described resin composition comprising basic components, provided that the total amount of components (B) and (C) does not exceed 65% by weight based on the total amount of the composition, thereby attaining a further improvement in the deformation intended in the present invention.

The components of the composition according to the present invention will now be described in detail.

In the present invention, a fibrous reinforcement (B) having a particular cross section is incorporated in a thermoplastic resin (A). The fibrous reinforcement used in the present invention is characterized by having an arcuate or semi-circular cross section. In general, a composition containing a fibrous reinforcement including a glass fiber incorporated therein brings about orientation of a fiber in the direction of flow during molding, which increases the anisotropy of the molding shrinkage (percentage difference in dimension between the molded article of the resin and the mold), so that there occurs an increase in the deformation. However, it has been unexpectedly found that even in the case of a composition containing a fibrous material incorporated therein, the anisotropy of the molding shrinkage is lowered and the deformation and warp are reduced when the reinforcement has a cross section as in the present invention.

The fibrous reinforcement (B) used in the present invention is one having such a cross section perpendicular to the longitudinal direction that the major axis (the longest linear distance in the cross section) to the minor axis (the longest linear distance in the cross section in a direction perpendicular to the major axis) is 1.3 to 10, preferably 1.5 to 5, more preferably 1.5 to 4.

The fibrous reinforcement (B) having a semi-circular or arcuate cross section brings about an increase in the specific surface area, which contributes to an increase in the adhesion between the fiber and the resin and an improvement in the bending strength and rigidity.

When the ratio of the major axis to the minor axis is less than 1.3, no effect can be attained on the deformation, while it is difficult to prepare a fibrous reinforcement having a ratio exceeding 10.

It is also possible to use a hollow fiber for the purpose of reducing the specific gravity of the fibrous reinforcement. As the cross-sectional area of the above-described fibrous reinforcement (B) increases, it becomes impossible to attain any sufficient reinforcing effect. On the other hand, a fibrous reinforcement having an excessively small cross-sectional area not only is difficult to prepare but also brings about a problem of handling. Therefore, the cross-sectional area of the fibrous reinforcement in the present invention is 2 X 10⁻⁵ to 8 X 10⁻³mm², preferably 8 X 10⁻⁵ to 8 X 10⁻³mm², particularly preferably 8 X 10⁻⁵ to 8 X 10⁻⁴mm².

The fibrous reinforcement may have any length. With consideration of the balance between the mechanical properties and deformation of the molded article, a small length is preferred in order to reduce the degree of deformation of the molded article, with a large length. i.e., an average fiber length of at least 30 cm is preferred from the viewpoint of mechanical strength, and the length is properly selected depending upon the required performance. In general, the length is preferably 50 to 100µm.

Examples of the fibrous reinforcement (B) include fibers of glass, carbon, mineral, boron, aluminium, stainless steel, copper, polyamide, high-molecular polyethylene, high-tenacity polyarylene, aramid, polyester and fluorocarbon.

These fibers are used depending upon various purposes such as enhancement of mechanical properties, impartation of conductivity, and improvement in the frictional characteristics. The fibrous reinforcement (B) may be used in the form of a mixture of two or more kinds of them. Glass fibers and carbon fibers are preferred, and glass fibers are most preferred. If necessary, it is preferred to use these fibrous reinforcements (B) with a binder or a surface treatment include functional compounds such as epoxy compounds and titantate compounds. These compounds may be used by previously conducting surface treatment or binding treatment, or alternatively may be added simultaneously in the preparation of the material.

The above-described fibrous reinforcement (B) having a non-circular cross section, e.g., a glass fiber, can be prepared by conducting spinning through a suitable shaped nozzle, such as a nozzle with semi-circular or arcuate holes. The nozzle serves as a bushing for ejecting molten glass. Alternatively, the glass fiber can be prepared by spinning molten glass through a plurality of nozzles having various contours (including a circular contour) provided so as to adjoin to each other and combining the spun molten glasses together to form a single filament. In the case of a carbon fiber, the raw material fiber can be prepared by conducting spinning in the same manner as that described above.

The amount of incorporation of the fibrous reinforcement (B) used in the present invention is 1 to 65% by weight, preferably 5 to 50%, by weight based on the total amount of the composition. When this amount is less than 1% by weight, no intended effect can be attained, while when it exceeds 65% by weight, it becomes difficult to conduct molding.The amount of the above-described functional surface treatment used in combination with the fibrous reinforcement is 0 to 10% by weight, preferably 0.05 to 5% by weight based on the fibrous reinforcement.

There is no particular limitation on the thermoplastic resin (A) used in the present invention, and any of the general thermoplastic resins may be used. Examples thereof include crystalline thermoplastic resins (A-1), such as polyethylene, polypropylene, polybutene-1, polyymethylpentene-1, polyacetal (homopolymer, copolymer), polyamide, fluororesin, polyphenylene sulfide, and polyesters (polyethylene terephthalate, polypropylene terephthalate, polybutylene terephthalate, wholly aromatic polyester) and noncrystalline thermoplastic resins (A-2) such as polyvinyl chloride, polyvinylidene chloride, polystyrene, ABS resin, acrylic resin, cellulose resin, polycarbonate, polyacrylate, phenoxy resin, polyphenylene oxide, polysulfone, ionomer, styrenebutadiene copolymer, and thermoplastic elastomer. It is also possible to use these resins in the form of a mixture of two or more of them. In this case as well, the effect of the present invention can be attained.

The composition comprises 35 to 99 wt of (A) and 1 to 65 wt % of (B). A weight ratio of (A-1) to (A-2) ranges preferably from 95/5 to 5/95, more preferably 55/5 to 40/20.

A preferable thermoplastic resin wherein the effect of the present invention is significant is one mainly composed of a crystalline thermoplastic resin which brings about a shrinkage during molding or when allowed to stand after molding. In some cases, combined use of a noncrystalline thermoplastic resin brings about a lowering in the degree of deformation and is preferred depending upon intended applications.

The crystalline thermoplastic resin (A-1) particularly preferably comprises polyacetal, polyester, polyamide or polyphenylene sulfide as a main component. The noncrystalline thermoplastic resin is preferably at least one member selected from polycarbonate, polyacrylate, acrylic resin, ABS resin, and phenoxy resin.

Even in the case of a single use, the composition of the present invention exhibits smaller deformation and better mechanical properties than the conventional resin composition containing a fiber having a circular cross section incorporated therein. Combined use of a particulate and/or flaky inorganic filler as component (C) enables attainment of a further excellent effect.

Examples of the particulate filler include silica, quartz powder, glass bead, glass powder, silicates such as calcium silicate, aluminium silicate, kaolin, talc, clay, diatomaceous earth and wollastonite, metallic oxides such as iron oxide, titanium oxide, zinc oxide and alumina, metal salts of carbonic acid such as calcium carbonate and magnesium carbonate, metal salts of sulfuric acid such as calcium sulfate and barium sulfate, and other fillers such as silicon carbide, silicon nitride, boron nitride and various kinds of metal powder.

Examples of the flaky inorganic material include mica and glass flake.

Component (C) is at least one member selected from the group consisting of glass beads, glass powder, glass flake, kaolin, clay, talc, calcium carbonate magnesium carbonate, and mica. This component can be properly selected depending upon the purposes of use, such as thermal resistance, dimensional stability, and electrical properties.

The amount of incorporation of the inorganic filler (C) used in the present invention is 5 to 50% by weight based on the total amount of the composition. In this case, it is preferred that the total amount of components (B) and (C) do not exceed 65% by weight based on the total amount of the composition from the viewpoint of moldability.

In using these fillers, it is preferred to use the above-described binder or surface treatment according to need.

Further, additives known in the art, e.g., antistatic agents, colorants, lubricants, mold releasing agents, nucleating agents, thermal stabilizers, ultraviolet absorbers, flame retardants, surfactants, plasticizers, or impact resistance improvers, may be added to the resin composition of the present invention for the purpose of imparting desired characteristics depending upon the purposes.

The resin composition of the present invention can be easily prepared by a method commonly employed in the art of preparing a resin containing a reinforcing filler. Specifically, the fibrous material may be used in the form of a chopped strand or a roving bound and cut into a suitable size, or a filament according to a customary method. For example, the composition of the present invention can be prepared by any of the following methods: a method which comprises preparing pellets having different compositions (master batch), mixing (diluting) the pellets in predetermined amounts; and molding the mixture to prepare a molded article having an intended composition, and a method wherein a molding machine is directly charged with particular components.

A composition containing a fibrous reinforcement having a particular cross section incorporated therein can remarkably improve the resistance to deformation, i.e., "warp", of a molded article without detriment to mechanical strengths, such as tensile strength and bending characteristics, rather with improvement in the mechanical strengths, i.e., has a good balance between the strength and deformation.

The composition of the present invention is suitable for use in external parts, structural parts, mechanical parts of automobiles, electrical appliances, general equipment. Specific examples of useful application include exterior furnishings of automobiles, such as fenders, bumpers, fuel lids, louvres, lamp housings, and outer door handles; structural parts (e.g., chassis) of audio-, video tape recorders, and stereo systems; and mechanical parts such as gears, cams, levers, guide stays, clutches, and rollers. Further, the composition of the present invention can be used also for various applications, i.e., electrical and electronic components, such as connectors, switches, relays, coil bobbins, key stems and chassis, and further cameras, radios, various apparatus for office automation, such as facsimile, copying machines and computers, IC cases, capacitor cases, and motor parts.

## Claims

1. A fiber-reinforced thermoplastic resin composition comprising: (A) a thermoplastic resin, and (B) 1 to 65% by weight, based on the total amount of the composition, of a fibrous reinforcement having a non-circular cross section wherein the cross-sectional area of said reinforcement is 2 X 10⁻⁵ to 8 X 10⁻³mm² and the ratio of the major axis of the cross section perpendicular to a longitudinal direction of said reinforcement (the longest linear distance in the cross section) to the minor axis (the longest linear distance in the cross section in a direction perpendicular to the major axis) is 1.3 to 10, characterised in that the cross section of the fibrous reinforcement has an arcuate or semi-circular contour.

2. A fiber-reinforced thermoplastic resin composition according to claim 1, wherein said fibrous reinforcement (B) is glass fiber.

3. A fiber-reinforced thermoplastic resin composition according to claim 1 or 2, wherein said fibrous reinforcement (B) has a cross-sectional area of 8 x 10⁻⁵ to 8 x 10⁻³ mm².

4. A fiber-reinforced thermoplastic conposition according to any preceding claim, wherein said fibrous reinforcement (B) has a ratio of the major axis to the minor axis of 1.5 to 5.

5. A fiber-reinforced thermoplastic resin composition according to any preceding claim, wherein said thermoplastic resin (A) is mainly composed of a member or a mixture of at least two members selected from crystalline thermoplastic resins.

6. A fiber-reinforced thermoplastic resin composition according to any preceding claim, wherein said thermoplastic resin (A) comprises a mixture of a crystalline thermoplastic resin (A-1) with a non-crystalline thermoplastic resin (A-2).

7. A fiber-reinforced thermoplastic resin composition according to claim 5 or claim 6, wherein said crystalline thermoplastic resin (A-1) is a member selected from the group consisting of polyacetals, polyesters, polyamides, and polyphenylene sulfides.

8. A fiber-reinforced thermoplastic resin composition according to any preceding claim, which further comprises, incorporated therein, a particulate and/or flaky inorganic filler as component (C) in an amount of 5 to 50% by weight, provided that the total amount of said components (B) and (C) does not exceed 65% by weight based on total amount of the composition.

## Patentansprüche

1. Faserverstärkte thermoplastische Harz-Zusammensetzung, umfassend: (A) ein thermoplastisches Harz und (B) 1 bis 65 Gew.-%, bezogen auf die Gesamtmenge der Zusammensetzung, einer faserartigen Verstärkung mit einem nicht kreisförmigen Querschnitt, wobei die Querschnittsfläche der Verstärkung 2 x 10⁻⁵ bis 8 x 10⁻³ mm² beträgt und das Verhältnis von der Hauptachse, die senkrecht zu einer Längsrichtung der Verstärkung ist (dem längsten linearen Abstand im Querschnitt), zur Nebenachse (dem längsten linearen Abstand im Querschnitt in einer Richtung, die senkrecht zur Hauptachse ist) 1,3 bis 10 beträgt, dadurch gekennzeichnet, daß der Querschnitt der faserartigen Verstärkung eine gekrümmte oder halbrunde Kontur aufweist.

2. Faserverstärkte thermoplastische Harz-Zusammensetzung nach Anspruch 1, wobei die faserartige Verstärkung (B) Glasfaser ist.

3. Faserverstärkte thermoplastische Harz-Zusammensetzung nach Anspruch 1 oder 2, wobei die faserartige Verstärkung (B) einen Querschnitt von 8 x 10⁻⁵ bis 8 x 10⁻³ mm² aufweist.

4. Faserverstärkte thermoplastische Harz-Zusammensetzung nach irgendeinem der vorhergehenden Ansprüche, wobei die faserartige Verstärkung (B) ein Verhältnis von der Hauptachse zur Nebenachse von 1,5 bis 5 aufweist.

5. Faserverstärkte thermoplastische Harz-Zusammensetzung nach irgendeinem der vorhergehenden Ansprüche, wobei das thermoplastische Harz (A) hauptsächlich aus einem Element oder aus einer Mischung von wenigstens zwei Elementen, ausgewählt aus kristallinen thermoplastischen Harzen, besteht.

6. Faserverstärkte thermoplastische Harz-Zusammensetzung nach irgendeinem der vorhergehenden Ansprüche, wobei das thermoplastische Harz (A) eine Mischung eines kristallinen thermoplastischen Harzes (A-1) mit einem nicht-kristallinen thermoplastischen Harz (A-2) umfaßt.

7. Faserverstärkte thermoplastische Harz-Zusammensetzung nach Anspruch 5 oder Anspruch 6, wobei das kristalline thermoplastische Harz (A-1) ein Element ist, das aus der aus Polyacetalen, Polyestern, Polyamiden und Polyphenylensulfiden bestehenden Gruppe ausgewählt ist.

8. Faserverstärkte thermoplastische Harz-Zusammensetzung nach irgendeinem der vorhergehenden Ansprüche, die weiterhin darin enthalten einen aus Teilchen bestehenden und/oder flockigen Füllstoff als Komponente (C) in einer Menge von 5 bis 50 Gew.-% umfaßt, mit der Maßgabe, daß die Gesamtmenge der Komponenten (B) und (C) nicht 65 Gew.-% überschreitet, bezogen auf die Gesamtmenge der Zusammensetzung.

## Revendications

1. Une composition de résine thermoplastique renforcée de fibres comprenant : (A) une résine thermoplastique et (B) 1 à 65 pour cent en poids, par rapport à la quantité totale de la composition, d'un renfort fibreux ayant une section transversale non circulaire où la surface de la section dudit renfort est comprise entre2 x 10⁻⁵ et 8 x 10⁻³ mm² et le rapport de l'axe majeur de la section transversale perpendiculaire à une direction longitudinale dudit renfort (la distance linéaire la plus longue de la section transversale) à l'axe mineur (la distance linéaire la plus longue de la section transversale dans une direction perpendiculaire à l'axe principal) est de 1,3 à 10, caractérisée en ce que la section transversale du renfort fibreux a un contour arqué ou semi-circulaire.

2. Une composition de résine thermoplastique renforcée de fibres selon la revendication 1, dans laquelle ledit renfort fibreux (B) est de la fibre de verre.

3. Une composition de résine thermoplastique renforcée de fibres selon la revendication 1 ou 2, dans laquelle ledit renfort fibreux (B) a une superficie de section comprise entre 8 x 10⁻⁵ et 8 x 10⁻³ mm^{2.}

4. Une composition de résine thermoplastique renforcée de fibres selon l'une quelconque des revendications précédentes, dans laquelle ledit renfort fibreux (B) a un rapport de l'axe majeur à l'axe mineur de 1,5 à 5.

5. Une composition de résine thermoplastique renforcée de fibres selon l'une quelconque des revendications précédentes, dans laquelle ladite résine thermoplastique (A) est principalement composée d'un membre ou d'un mélange d'au moins deux membres choisis parmi les résines thermoplastiques cristallines.

6. Une composition de résine thermoplastique renforcée de fibres selon l'une quelconque des revendications précédentes, dans laquelle ladite résine thermoplastique (A) comprend un mélange d'une résine thermoplastique cristalline (A-1) avec une résine thermoplastique non cristalline (A-2).

7. Une composition de résine thermoplastique renforcée de fibres selon la revendication 5 ou 6 dans laquelle ladite résine thermoplastique cristalline (A-1) est un membre choisi dans le groupe composé des polyacétals, des polyesters, des polyamides et des sulfures de polyphénylène.

8. Une composition de résine thermoplastique renforcée de fibres selon l'une quelconque des revendications précédentes qui comprend en outre, incorporée en son sein, une charge minérale en particules et/ou en paillettes comme composant (C) dans une quantité de 5 à 50 pour cent en poids, à condition que la quantité totale desdits composants (B) et (C) ne dépasse pas 65 pour cent en poids par rapport à la quantité totale de la composition.
